(19)

Europäisches Patentamt
European Patent Office
Office européen des brevets

(11)  **EP 3 241 986 A1**

(12)  **EUROPEAN PATENT APPLICATION**
published in accordance with Art. 153(4) EPC

(43) Date of publication:
**08.11.2017  Bulletin 2017/45**

(21) Application number: **15873443.4**

(22) Date of filing: **28.08.2015**

(51) Int Cl.:
**F01D 1/32** (2006.01)      **F01D 1/14** (2006.01)
**F01D 1/06** (2006.01)

(86) International application number:
**PCT/KR2015/009052**

(87) International publication number:
**WO 2016/104915 (30.06.2016 Gazette 2016/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.12.2014  KR 20140188810**

(71) Applicant: **Posco Energy Co. Ltd.**
**Seoul 06194 (KR)**

(72) Inventors:
• **LEE, Jae Jun**
  **Seoul 06509 (KR)**
• **LEE, Sang Hoon**
  **Seoul 04750 (KR)**

• **OH, Sung Keun**
  **Incheon 22765 (KR)**
• **LEE, Sang Myeong**
  **Seongnam-si**
  **Gyeonggi-do 13572 (KR)**
• **LIM, Ju Chang**
  **Incheon 22749 (KR)**
• **KIM, Ki Tae**
  **Anyang-si**
  **Gyeonggi-do 14056 (KR)**
• **CHANG, Young Il**
  **Anyang-si**
  **Gyeonggi-do 14056 (KR)**

(74) Representative: **Michalski Hüttermann & Partner**
**Patentanwälte mbB**
**Speditionstraße 21**
**40221 Düsseldorf (DE)**

(54)  **STEAM TURBINE WITH IMPROVED AXIAL FORCE PROPERTY**

(57)      Disclosed is a steam turbine capable of reducing the load of a bearing supporting a turbine shaft transmitting rotational driving force of a plurality of nozzle-equipped rotary bodies arranged in multiple stages. The steam turbine includes a housing (110); a turbine shaft (120) pivotably supported by a bearing (121) in the housing; and a plurality of dish-shaped nozzle-equipped rotary bodies (130) integrally combined with the turbine shaft (120), provided with one or more nozzle holes (131) from which working fluid is ejected so that the nozzle rotations bodies (130) can be rotated, and stacked in an axial direction of the turbine shaft (120). The nozzle hole (131) is inclined with respect to a normal direction n of the periphery surface of the nozzle-equipped rotary body (130) and is inclined toward an axial direction c of the turbine shaft (120).

**FIG. 5**

## Description

### Technical Field

The present invention relates to a steam turbine. More particularly, the present invention relates to a steam turbine capable of reducing the load of a bearing element supporting a turbine shaft transmitting rotational driving force of a plurality of nozzle-equipped rotary bodies arranged in multiple stages.

### Background Art

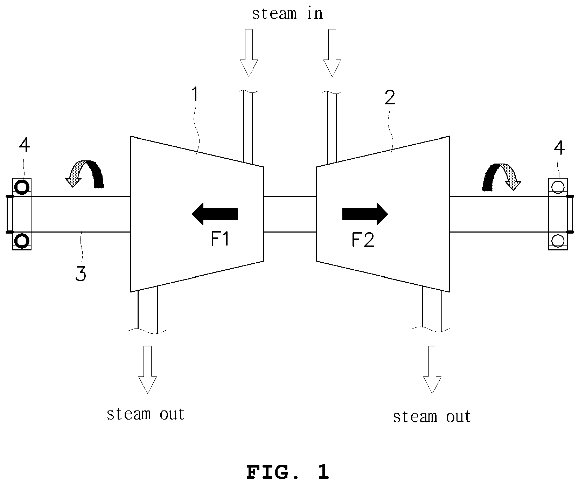

FIG. 1 is a schematic diagram illustrating the construction of a conventional steam turbine.

With reference to FIG. 1, according to a conventional art, a steam turbine system includes a first turbine 1 and a second turbine arranged in two stages and equalizes the torque of each turbine, thereby offsetting axial loads applied to bearings 4 that support a turbine shaft 3 and thus reducing the load applied to the bearings.

However, this conventional steam turbine system has a problem that the use of two-stage turbines increases cost and the overall size of the system.

As examples of other conventional technologies, there are various steam turbines using reaction of a steam jet. These steam turbines obtain rotational energy from the reaction of steam energy ejected from a turbine. For this reason, these steam turbines have a simple structure and high thermal efficiency, so they are suitably used as medium-capacity or small-capacity motors.

For example, Korean Patent Application Publication No. 10-2012-47709 (published on May 14, 2012), Korean Patent Application Publication No. 10-2013-42250호 (published on April 26, 2013), and Korean Patent No. 10-1229575 (Registered on January 29, 2013) disclose reaction type turbine apparatuses.

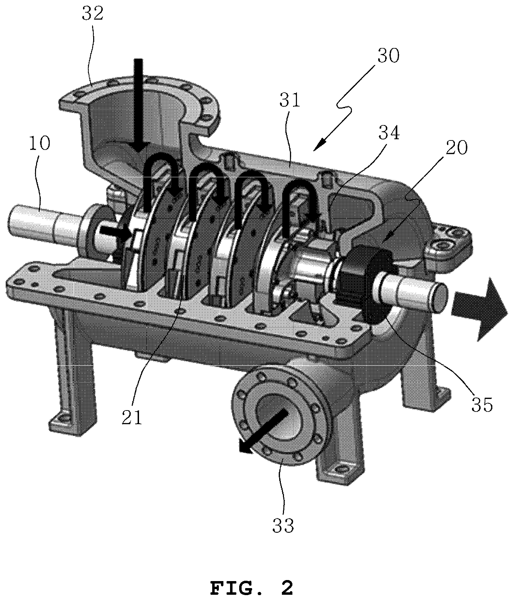

FIG. 2 is a partially cut-away view of a conventional reaction type steam turbine.

With reference to FIG. 2, the steam turbine includes a turbine shaft 10, a rotor 20 provided with a plurality of nozzle-equipped rotary bodies 21 that ejects working fluid in a tangential direction, and a housing 30 pivotably supporting the rotor 20 and providing a working fluid channel such that the rotor 20 can be rotated by the working fluid.

In the rotor 20, the nozzle-equipped rotary bodies 21 are arranged in multiple stages along the turbine shaft 10 while being spaced from each other. Each of the nozzle-equipped rotary bodies 21 includes a pair of discs, a fluid inlet that is disposed at one end thereof in an axial direction and through which the working fluid is introduced into the nozzle-equipped rotary body, and a plurality of nozzle holes from which the working fluid moving through an exhaust channel formed between the pair of discs is ejected in a tangential direction.

The housing 30 includes a body portion 31 having a substantially cylindrical shape, an inlet 32 that is provided at a first side of the body portion 31 and through which the working fluid is introduced into the body portion 31, an outlet 33 provided at a second side, opposite to the first side, of the body portion 31 such that the working fluid is discharged through the outlet 33, and a plurality of barrier walls 34 protruding inward from the inside surface of the body portion 31 and disposed between the nozzle-equipped rotary bodies 21.

The housing 30 is provided with a bearing 35 that pivotably supports the turbine shaft 10.

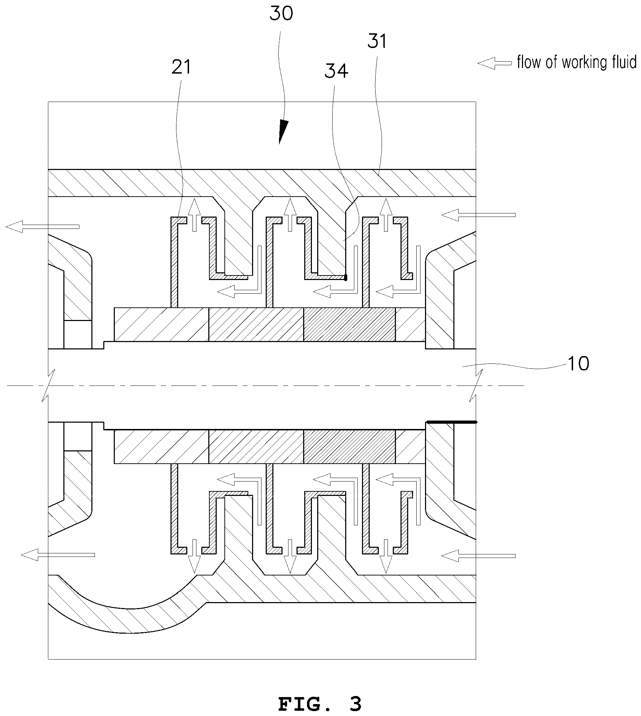

FIG. 3 is a cross-sectional view of the conventional steam turbine. The working fluid (i.e. steam) is supplied from the right side of FIG. 3, introduced into a nozzle-equipped rotary body 21 through a center portion of the nozzle-equipped rotary body 21, ejected through a nozzle hole extending in a tangential direction of the outer periphery surface of the nozzle-equipped rotary body 21, and introduced into another nozzle-equipped rotary body arranged at the next stage. In this way, the nozzle-equipped rotary bodies 21 in multiple stages are rotated by the working fluid.

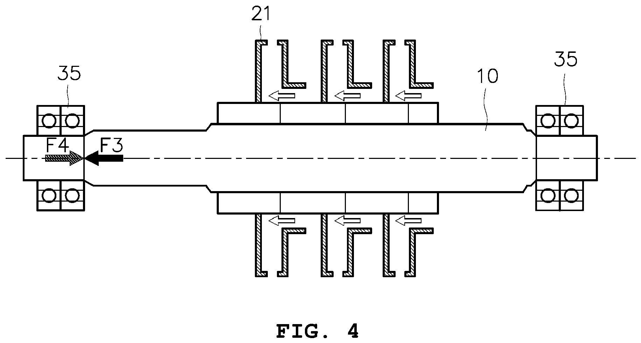

FIG. 4 is a schematic diagram illustrating a main portion of the conventional steam turbine. Due to the flow of the working fluid that sequentially flows through the nozzle-equipped rotary bodies 21 in the axial direction of the turbine shaft 10, there is an action force acting in the axial direction. Accordingly, an axial force F3 is applied to the bearing 35 in a direction toward the left side of FIG. 4 and the bearing 35 generates a reaction force F4 that counters the action force F3.

As described above, in the conventional steam turbine, the lifespan of the bearing is shortened due to the axial force applied by the working fluid flowing in the axial direction. For this reason, specific bearings such as a tilting pad bearing that can resist the axial load is required, which is a factor of increasing manufacturing cost of a turbine.

### Document of Related Art

(Patent Document 1). Korean Patent Application Publication No. 10-2012-0047709 (Published on May 14, 2012)
(Patent Document 2) Korean Patent Application Publication No. 10-2013-0042250 (Published on April 26, 2013)

(Patent Document 3) Korean Patent No. 10-1229575 (Registered as of January 29, 2013)

**Disclosure**

**Technical Problem**

Accordingly, the present invention has been made keeping in mind the above problems occurring in the related art, and an object of the present invention is to provide a steam turbine capable of reducing the load of a bearing element supporting a turbine shaft transmitting rotational driving force of a plurality of nozzle-equipped rotary bodies connected to each other and arranged in multiple stages.

**Technical Solution**

In order to accomplish the object of the invention, according to one aspect, there is provided a steam turbine including: a housing; a turbine shaft pivotably supported by a bearing (121) in the housing; and a plurality of disk-shaped nozzle-equipped rotary bodies integrally combined with the turbine shaft, stacked in an axial direction of the turbine shaft, and provided with one or more nozzle holes from which working fluid is ejected such that the nozzle-equipped rotary bodies are rotated, wherein the nozzle holes are inclined with respect to a normal direction n of the periphery surface of the nozzle-equipped rotary body and inclined toward an axial direction c of the turbine shaft from the normal direction n.
Preferably, in the present invention, the nozzle holes may be symmetrically arranged with respect to a rotation axis of the nozzle-equipped rotary body.
Preferably, in the present invention, the nozzle hole is inclined with respect to a direction in which the working fluid flows.
Preferably, in the present invention, an inclination angle of the nozzle hole may vary for each nozzle-equipped rotary body.

**Advantageous Effects**

In the steam turbine according to the present invention, the nozzle holes formed in the nozzle-equipped rotary bodies arranged in multiple stages are formed to be inclined at predetermined inclination angles. Therefore, the total axial reaction force that is opposite to the actions of steam jets ejected from the nozzle holes is offset by the resultant axial jet force of the steam jets ejected from the nozzle holes. Thus, the axial load of the turbine shaft is reduced, which results in decrease in vibration and fatigue attributable to stress. Consequently, it is possible to prevent the lifespan of a bearing from being shortened.

**Description of Drawings**

   FIG. 1 is a schematic diagram illustrating a conventional steam turbine;
   FIG. 2 is a partial cut-away view illustrating another conventional steam turbine;
   FIG. 3 is a cross-sectional view illustrating the conventional steam turbine;
   FIG. 4 is a schematic diagram illustrating a main portion of the conventional steam turbine; and
   FIG. 5 is a schematic diagram illustrating a steam turbine according to one embodiment of the present invention.

**Best Mode**

Specific structural and functional descriptions of embodiments of the present invention disclosed herein are only for illustrative purposes of the embodiments according to the concept of the present invention, and the present invention may be embodied in many different forms. Therefore, the embodiments of the present invention are disclosed should not be construed as limiting the present invention. On the contrary, the present invention is intended to cover not only the exemplary embodiments, but also various alternatives, modifications, equivalents and other embodiments that may be included within the spirit and scope of the present invention as defined by the appended claims.
It will be understood that, although the terms "first," "second," etc. may be used herein to describe various elements, these elements should not be limited by these terms. These terms are only used to distinguish one element from another element. For instance, a first element discussed below could be termed a second element without departing from the teachings of the present invention. Similarly, the second element could also be termed the first element.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Other expressions that explain the relationship between elements, such as "between," "directly between," "adjacent to," or "directly adjacent to," should be construed in the same way.

The terminology used herein is for the purpose of describing particular embodiments only and is not intended to be limiting. As used herein, the singular forms "a," "an" and "the" are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Hereinafter, embodiments of the present invention will be described below with reference to the accompanying drawings.

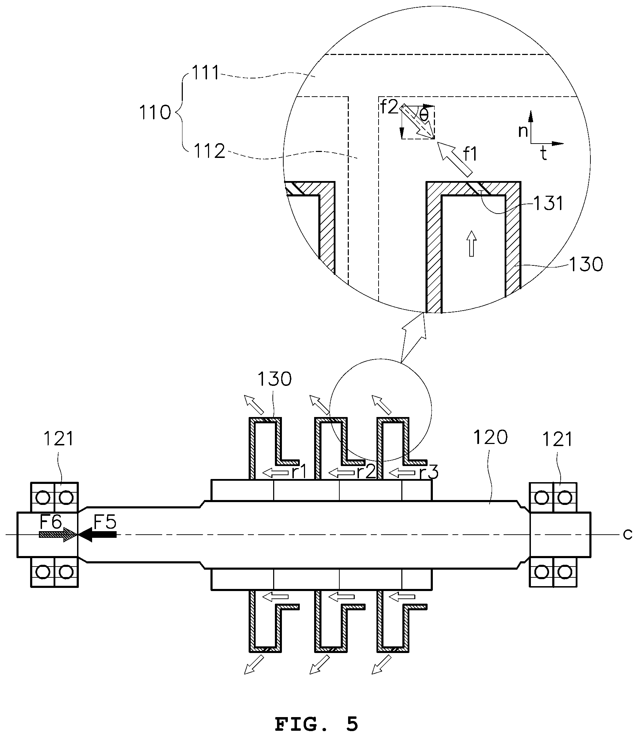

FIG. 5 is a schematic diagram illustrating the construction of a steam turbine according to one embodiment of the present invention. For reference, to help provide easy understanding of the invention, it is assumed that working fluid is supplied from the right side of FIG. 5. The working fluid supplied to the steam turbine flows through each nozzle-equipped rotary body, and then flows out from the left side of FIG. 5. A normal direction of the periphery surface of the nozzle-equipped rotary body is denoted by "n", and a tangential direction of the periphery surface of the nozzle-equipped rotary body is denoted by "t". In this case, the tangential direction is in parallel with an axial direction c of a turbine shaft.

As illustrated in FIG. 5, the steam turbine of the present invention includes: a housing 110; a turbine shaft 120 pivotably supported by a bearing 121 in the housing 110; and a plurality of disk-shaped nozzle-equipped rotary bodies 130 integrally combined with the turbine shaft 120, provided with one or more nozzle holes 131 from which the working fluid is ejected so that the nozzle-equipped rotary bodies can be rotated, and stacked in the axial direction of the turbine shaft 120. Each nozzle hole 131 is inclined with respect to the normal direction n of the periphery surface of the nozzle-equipped rotary body 130. The nozzle hole 131 is inclined toward the axial direction c of the turbine shaft 120 from the normal direction n.

The housing 110 includes a body portion 111 that defines the exterior of the steam turbine, and a plurality of barrier walls 112 protruding inward from the inside surface of the body portion 111 and disposed between the nozzle-equipped rotary bodies 130. Each barrier wall 112 guides the working fluid such that the working fluid ejected from a certain-stage nozzle-equipped rotary body 130 flows along the surface of the barrier wall 112 to a center portion of a next-stage nozzle-equipped rotary body.

Specifically, in the present invention, the periphery surface of the nozzle-equipped rotary body 130 is provided with the nozzle holes 131, and the nozzle holes are inclined with respect to the normal direction n. The nozzles are inclined to have an inclination angle $\theta$ between 0° and 90° (0°<$\theta$<90°) with respect to the axial direction c of the turbine shaft 120.

Preferably, the nozzle hole 131 is inclined to be oblique to the flow of the working fluid.

When the working fluid is ejected from the inclined nozzle hole 131, a predetermined jet force f1 is generated, and a reaction force f2 opposite to the jet force f1 acts on the working fluid flowing in the housing.

A tangential component f2_t of the reaction force f2 acts in the opposite direction of the axial force applied by the flow of the working fluid, thereby offsetting the axial force applied by the working fluid.

The total force of the tangential component f2_t at the inclined nozzle hole 131 is expressed as the following equation:

[Equation]

$$F6 = 3 \times f2 \cdot \sin\theta$$
$$= -3 \times f1 \cdot \sin\theta$$
$$= -(r1 + r2 + r3)$$
$$= -R5$$

The total axial reaction force F6 generated by steam jets ejected from the inclined nozzle holes is set to be equal to the resultant axial force F5 of the jet forces f1 of the steam jets ejected from the nozzle holes. Therefore, the axial load of the turbine shaft 120 is reduced, and thus vibration and fatigue problems attributable to stress are minimized. Consequently, it is possible to prevent the lifespan of a bearing from being shortened.

Meanwhile, a normal component f2-N of the jet force f1 of the steam jet ejected from the nozzle hole can be offset by using a structure in which the nozzle-equipped rotary body 130 is provided with a plurality of nozzle holes symmetrically arranged with respect to a rotation axis of the nozzle-equipped rotary body.

For example, two nozzles formed in the periphery surface of the nozzle-equipped rotary body 130 are arranged at an angle of 180° with respect to each other. The normal components f2_n of the jet forces f1 of the steam jets ejected from the nozzle holes can be offset.

Although a description has been made such that the nozzle-equipped rotary bodies have an equal jet force f1, the jet forces of the working fluid ejected from the respective nozzle-equipped rotary bodies in multiple stages actually differ. In consideration of the difference in the jet force among stages, the inclination angle of the nozzle hole of the nozzle-equipped rotary body is optimally set for each stage. Therefore, the inclination angles of the nozzle holes may vary for each stage nozzle-equipped rotary body.

For example, as to a nozzle-equipped rotary body closer to the inlet through which the working fluid is introduced and a nozzle-equipped rotary body closer to the outlet through which the working fluid is discharged, the axial force of the working fluid of the former rotary body is larger than that of the latter rotary body. Therefore, the inclination angle of the nozzle hole of the nozzle-equipped rotary body closer to the inlet may be smaller than that of the nozzle-equipped rotary body closer to the outlet.

The present invention is not limited to the embodiments described above and the accompanying drawings and those skilled in the art will appreciate that various modifications, alterations, changes, and substitutions are possible, without departing from the scope and spirit of the invention as disclosed in the accompanying claims.

### <Description of the Reference Numerals in the Drawings>

| | |
|---|---|
| 110: Housing | 120: Turbine shaft |
| 121: Bearing | 130: Nozzle-equipped rotary body |
| 131: Nozzle hole | |

### Claims

1. A steam turbine comprising:

   a housing;
   a turbine shaft pivotably supported by a bearing in the housing;
   a plurality of disk-shaped nozzle-equipped rotary bodies integrally combined with the turbine shaft, provided with one or more nozzle holes from which working fluid is ejected such that the nozzle-equipped rotary bodies are rotated and stacked in an axial direction of the turbine shaft,
   wherein each of the nozzle holes is an inclined hole that is inclined with respect to a normal direction (n) of a periphery surface of the nozzle-equipped rotary body turbine and is inclined toward an axial direction (c) of the turbine shaft.

2. The steam turbine according to claim 1, wherein the nozzle holes are symmetrically arranged with respect to a rotation axis of the nozzle-equipped rotary body.

3. The steam turbine according to claim 1, wherein the nozzle hole is inclined with respect to a direction in which the working fluid flows.

4. The steam turbine according to claim 1, wherein the nozzle holes of each nozzle-equipped rotary body have different inclination angles.

**FIG. 1**

FIG. 2

30

21    34    31

⟵ flow of working fluid

10

FIG. 3

FIG. 4

FIG. 5

## INTERNATIONAL SEARCH REPORT

| International application No. |
| --- |
| **PCT/KR2015/009052** |

**A.  CLASSIFICATION OF SUBJECT MATTER**

*F01D 1/32(2006.01)i, F01D 1/14(2006.01)i, F01D 1/06(2006.01)i*

According to International Patent Classification (IPC) or to both national classification and IPC

**B.  FIELDS SEARCHED**

Minimum documentation searched (classification system followed by classification symbols)
F01D 1/32; F01D 1/34; F01D 1/06; F01D 9/02; F01D 5/14; F01D 1/02; F01D 1/14

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: steam turbine, housing, turbine shaft, nozzle rotating body, nozzle hole, incline

**C.  DOCUMENTS CONSIDERED TO BE RELEVANT**

| Category* | Citation of document, with indication, where appropriate, of the relevant passages | Relevant to claim No. |
| --- | --- | --- |
| Y | KR 10-2012-0047709 A (HK TURBINE CO., LTD.) 14 May 2012<br>See paragraphs [0028], [0063], claims 1-3, 7 and figures 1-4, 10. | 1-4 |
| Y | KR 10-2009-0037201 A (KIM, Ki Tae) 15 April 2009<br>See abstract, claims 1-2, 5, 7, 11, 13, 15 and figures 2, 7, 9. | 1-4 |
| A | WO 2005-066461 A1 (POWELL, Joseph Augustus) 21 July 2005<br>See abstract, claims 1-2 and figures 1-2. | 1-4 |
| A | US 6354800 B1 (HAYS, Lance G.) 12 March 2002<br>See claims 25, 28 and figures 3-3a, 9. | 1-4 |
| A | KR 10-0988582 B1 (WBMSCIENTIFIC TECHNIQUE. LTD.) 18 October 2010<br>See claim 1 and figures 2-5. | 1-4 |

☐  Further documents are listed in the continuation of Box C.       ☒  See patent family annex.

| | |
| --- | --- |
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 22 DECEMBER 2015 (22.12.2015) | **22 DECEMBER 2015 (22.12.2015)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (January 2015)

# EP 3 241 986 A1

<table>
<tr><td colspan="2">INTERNATIONAL SEARCH REPORT<br>Information on patent family members</td><td>International application No.<br><br>**PCT/KR2015/009052**</td></tr>
</table>

| Patent document cited in search report | Publication date | Patent family member | Publication date |
|---|---|---|---|
| KR 10-2012-0047709 A | 14/05/2012 | CN 103201459 A<br>CN 103201459 B<br>EP 2612986 A2<br>JP 2013-536914 A<br>JP 5625117 B2<br>KR 10-1044395 B1<br>KR 10-1355104 B1<br>KR 10-2013-0122595 A<br>WO 2012-030052 A2<br>WO 2012-030052 A3 | 10/07/2013<br>15/04/2015<br>10/07/2013<br>26/09/2013<br>12/11/2014<br>27/06/2011<br>24/01/2014<br>07/11/2013<br>08/03/2012<br>26/04/2012 |
| KR 10-2009-0037201 A | 15/04/2009 | KR 10-1052253 B1<br>KR 10-1388216 B1 | 27/07/2011<br>23/04/2014 |
| WO 2005-066461 A1 | 21/07/2005 | EP 1714005 A1<br>GB 0400437 D0 | 25/10/2006<br>11/02/2004 |
| US 6354800 B1 | 12/03/2002 | AU 2001-47829 A1<br>MX PA02009651 A<br>WO 01-75275 A1 | 15/10/2001<br>10/03/2003<br>11/10/2001 |
| KR 10-0988582 B1 | 18/10/2010 | KR 10-2009-0076158 A | 13/07/2009 |

Form PCT/ISA/210 (patent family annex) (January 2015)

## REFERENCES CITED IN THE DESCRIPTION

**Patent documents cited in the description**

- KR 10201247709
- KR 101229575
- KR 1020120047709
- KR 1020130042250